# EUROPEAN PATENT SPECIFICATION

(11) **EP 4 180 820 B1**
(45) Date of publication and mention of the grant of the patent: **15.10.2025**
(21) Application number: 21836833.0
(22) Date of filing: 18.02.2021
(51) Int. Cl.: G01N 35/00

(54) **OPENING AND CLOSING LID DEVICE, AND AUTOMATIC ANALYSIS DEVICE COMPRISING SAME**
ÖFFNUNGS- UND SCHLIESSDECKELVORRICHTUNG UND AUTOMATISCHE ANALYSEVORRICHTUNG DAMIT
DISPOSITIF DE COUVERCLE D'OUVERTURE ET FERMETURE, ET DISPOSITIF D'ANALYSE AUTOMATIQUE COMPRENANT CE DISPOSITIF

(30) Priority: 09.07.2020 JP 2020118349
(43) Date of publication of application: 17.05.2023
(73) Proprietor: HITACHI HIGH-TECH CORPORATION, Tokyo 105-6409 (JP)
(72) Inventor: YAMASHITA, Taichiro, Tokyo 100-8280 (JP); OKUSA, Takenori, Tokyo 105-6409 (JP); SUENARI, Tsukasa, Tokyo 105-6409 (JP)
(74) Representative: Mewburn Ellis LLP
(86) International application number: PCT/JP2021/006188
(87) International publication number: WO 2022/009458

(56) References cited:
- WO-A1-2020/208934
- CN-A- 110 794 157
- CN-A- 110 794 157
- GB-A- 2 406 643
- JP-A- 2003 057 247
- JP-A- 2007 160 816
- JP-A- 2012 032 232
- JP-A- 2012 073 203
- JP-A- 2012 073 203
- JP-A- 2017 202 072
- JP-A- 2017 202 072
- JP-U- H0 635 956
- US-A1- 2002 025 275
- US-A1- 2007 138 193
- US-A1- 2014 241 945

## Description

### Technical Field

The present invention relates to an opening and closing lid device and an automatic analyzer including the same.

### Background Art

An automatic analyzer is a device that performs qualitative analysis or quantitative analysis of a specific component contained in a biological sample such as blood, urine, or spinal fluid, and is an essential device in a facility such as a hospital or a medical examination facility in which many patient specimens need to be treated in a short time.

In such an automatic analyzer, in order to prevent an influence on an analysis result of an external environment, pretreatment such as dispensing and stirring of a reaction solution or a reagent is performed in a cover region in which light is shielded and a temperature is adjusted. In order to maintain a measurement result with high accuracy, it is required to perform maintenance work such as cleaning or replacement of components in the cover region periodically or in accordance with a use situation.

When performing the maintenance work, a maintenance worker opens an opening and closing lid provided above or on a front surface of a cover covering a device used for the pretreatment, and inserts fingers or a cleaning tool from a gap generated between the opening and closing lid and the cover to perform the maintenance work. When the maintenance work is completed and the opening and closing lid is closed, the gap between the opening and closing lid and the cover is sealed, and a region inside the cover returns to a state in which light is shielded and the temperature is adjusted. The opening and closing lid that is opened during work needs to be provided with a member for maintaining a fully opened state so as not to be unexpectedly closed during work. Some examples of prior art documents are JP2017202072 and GB2406643.

As a related technique for maintaining an opened state of an opening and closing door, for example, PTL 1 discloses an X-ray inspection device that includes an X-ray source and a sensor inside a main body provided with an openable and closable lid body, and inspects an article to be inspected by detecting, with the sensor, X-rays emitted from the X-ray source and transmitted through the article to be inspected inside the main body. The X-ray inspection device includes: a coupling member including a first substrate portion mounted to the main body, a second substrate portion mounted to the lid body, and a rotating portion coupling the first substrate portion and the second substrate portion such that the first substrate portion and the second substrate portion are relatively rotatable, and coupling the lid body to the main body in an openable and closable manner; and an opening angle setting member mounted to at least one of the first substrate portion and the second substrate portion of the coupling member, and comes into contact with the other side of the first substrate portion and the second substrate portion when the lid body is rotated by a predetermined angle in an opening direction from a position at which the main body is closed.

### Citation List

### Patent Literature

PTL 1: JP2013-200166A

### Summary of Invention

### Technical Problem

In the related technique described in PTL 1, an outlet cover is fixed to an opened position by biasing, with a biasing member, a force substantially equivalent to a force biased in a closing direction by own weight of the outlet cover. That is, since the outlet cover moves to a closed position due to the own weight even a slight force acts in the closing direction of the outlet cover, for example, if a maintenance worker or the like comes into contact with the outlet cover and applies a force in the closing direction, work performed by accessing the inside of the outlet cover is hindered. Although an attempt is made to stably maintain the outlet cover in the opened position by increasing an opening degree of the outlet cover, a force may be applied to the outlet cover from above due to contact of the maintenance worker or the like, and thus an excessive load may be applied to the rotating portion and a stopper portion.

The invention has been made in view of the above, and an object thereof is to provide an opening and closing lid device that can stably maintain an opening and closing lid in an opened position and move the opening and closing lid to a fully closed position in accordance with a biasing applied to the opening and closing lid from above, and an automatic analyzer using the opening and closing lid device.

### Solution to Problem

The present invention is related to an opening and closing lid device, as defined in claim 1. Other optionals aspects being defined in dependent claims 2-5.

### Advantageous Effects of Invention

According to the invention, the opening and closing lid can be stably maintained in an opened position, and the opening and closing lid can be moved to a fully closed position in accordance with a biasing applied to the opening and closing lid from above.

### Brief Description of Drawings

[FIG. 1] FIG. 1 is a plan view schematically showing an overall configuration of an automatic analyzer.
[FIG. 2] FIG. 2 is a perspective view schematically showing the overall configuration of the automatic analyzer.
[FIG. 3] FIG. 3 is a left side view schematically showing the overall configuration of the automatic analyzer.
[FIG. 4] FIG. 4 is an enlarged view showing an extracted pretreatment device of the automatic analyzer, and is a front view serving as a partial perspective view showing a vicinity of a rotation center portion of an opening and closing lid.
[FIG. 5] FIG. 5 is an enlarged plan view showing the extracted pretreatment device of the automatic analyzer.
[FIG. 6] FIG. 6 is a cross-sectional view taken along a line B-B in FIG. 4 and showing an enlarged boundary portion between the opening and closing lid in a fully closed position and a region cover.
[FIG. 7] FIG. 7 is a cross-sectional view showing an extracted hinge portion and showing a case in which the opening and closing lid is in a fully closed position.
[FIG. 8] FIG. 8 is a cross-sectional view showing the extracted hinge portion and showing a state in which the opening and closing lid is rotated from the fully closed position to a fully opened position.
[FIG. 9] FIG. 9 is a cross-sectional view showing the extracted hinge portion and showing a case in which the opening and closing lid is in the fully opened position.
[FIG. 10] FIG. 10 is a cross-sectional view showing the extracted hinge portion and showing a case in which the opening and closing lid is in the fully opened position.
[FIG. 11] FIG. 11 is a lower perspective view showing an extracted pretreatment unit and showing a case in which the opening and closing lid is in the fully closed position.
[FIG. 12] FIG. 12 is a lower perspective view showing the extracted pretreatment unit and showing a case in which the opening and closing lid is in the fully opened position.
[FIG. 13] FIG. 13 is a front view showing the extracted pretreatment device according to the present embodiment and showing a state in which the opening and closing lid is in the fully opened position.
[FIG. 14] FIG. 14 is a front view showing a configuration of a pretreatment device according to a comparative example and showing a state in which an opening and closing lid is in a fully closed position.
[FIG. 15] FIG. 15 is a front view showing a configuration of the pretreatment device according to the comparative example and showing a state in which the opening and closing lid is in a fully opened position.

### Description of Embodiments

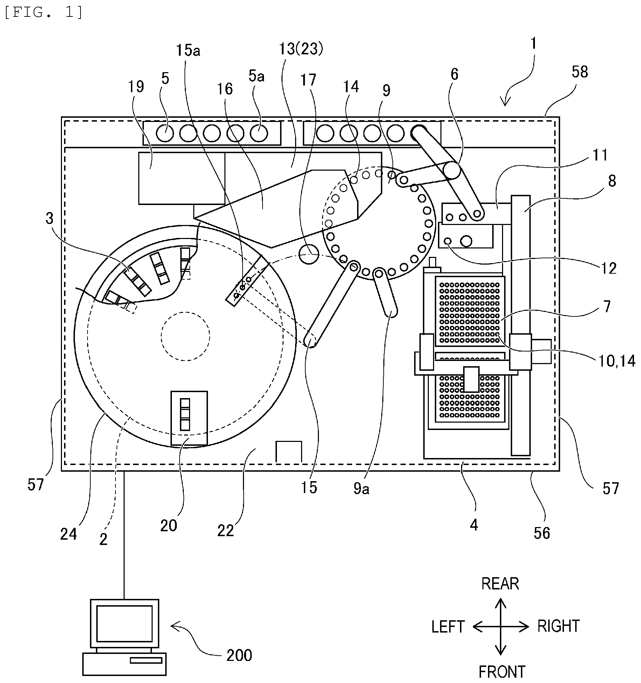

An embodiment of the invention will be described with reference to FIGS. 1 to 15.

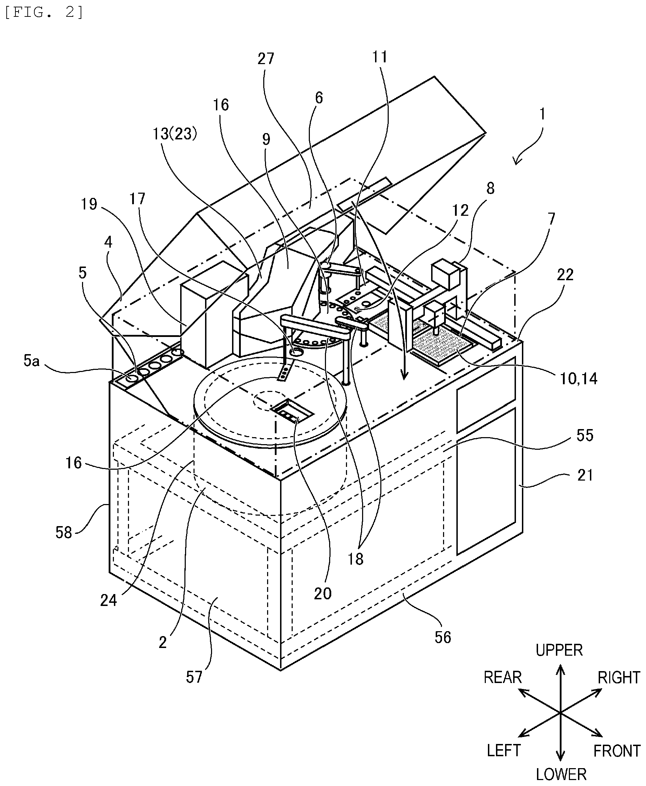

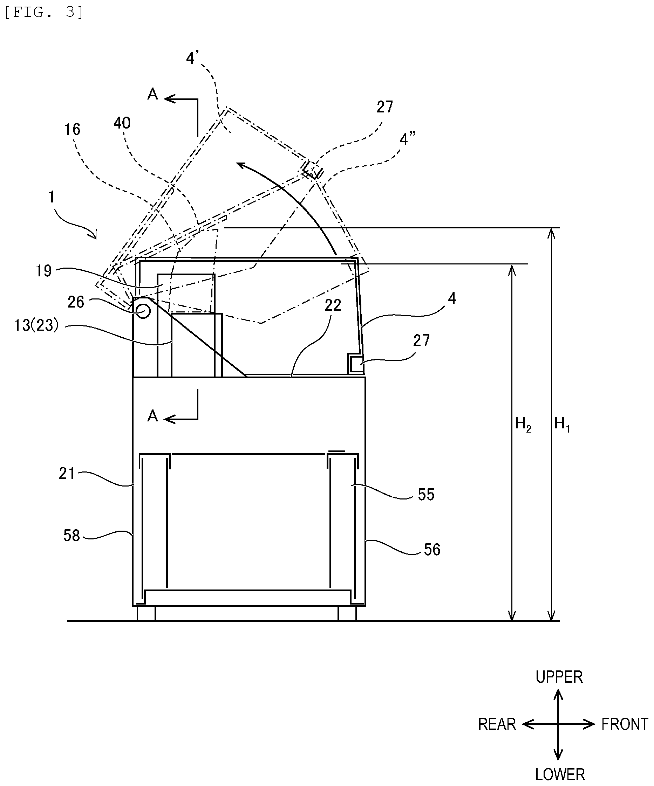

FIGS. 1 to 3 are views schematically showing an overall configuration of an automatic analyzer according to the present embodiment, in which FIG. 1 is a plan view, FIG. 2 is a perspective view, and FIG. 3 is a left side view. In the following description, a forward direction of the automatic analyzer is defined as a downward direction in FIG. 1, a rightward direction is defined as a rightward direction in FIG. 1, and an upward direction is defined as an outward direction from a paper surface in FIG. 1.

In FIGS. 1 to 3, an automatic analyzer 1 includes a reagent disk 2, a safety cover 4, a sample conveying mechanism 5, a sample dispensing mechanism 6, a tip rack 7, a conveying mechanism 8, an incubator 9, a stirring mechanism 9a, a sample dispensing tip buffer 11, a disposal hole 12, a pretreatment device 13, a reagent dispensing probe 15, a cleaning mechanism 17, a detection device 19, a housing 21, and a reagent cold storage 24 (reagent storage).

The housing 21 has, for example, a substantially rectangular parallelepiped shape in which the periphery of a highly rigid housing frame 55 formed by joining steel plates by welding, rivet fastening, or the like is covered with a front plate 56, left and right side plates 57, a rear plate 58, and an upper plate (that is, a work surface 22), and accommodates therein the sample conveying mechanism 5, the cleaning mechanism 17, the reagent cold storage 24, and constituent members of the analyzer such as substrates and flow paths (not shown). The front plate 56, the left and right side plates 57, and the rear plate 58 are detachable at the time of maintenance work.

The safety cover 4 is pivotally supported to be rotatable (openable and closable) around a cover support shaft 26 provided along a left-right direction on an upper portion of a rear surface of the housing 21. In FIGS. 1 and 3, a state in which the safety cover 4 is closed is indicated by a solid line, and in FIG. 3, a state in which the safety cover 4 is opened is indicated by a dash-dot line. In FIG. 2, a state in which the safety cover 4 is opened is indicated by a solid line, and a state in which the safety cover 4 is closed is indicated by a dash-dot line. The safety cover 4 is provided with, for example, an interlock (not shown) using a solenoid or the like as a driving source, and the safety cover 4 is fixed and maintained in a closed state by energizing the solenoid to apply a latch during operation of the automatic analyzer 1. That is, at this time, the safety cover 4 cannot be opened by an operator. While the automatic analyzer 1 is stopped, the energization of the solenoid is released, and the safety cover 4 can be opened.

The sample conveying mechanism 5 includes, for example, a belt conveyor and a rack handler, and moves a sample 5a in the automatic analyzer 1 and conveys the sample 5a to a movable range of the sample dispensing mechanism 6.

The tip rack 7 is attachable to and detachable from the automatic analyzer 1, and is provided on an upper surface of the automatic analyzer 1 by the operator in a state in which a plurality of unused sample dispensing tips 10 and a plurality of unused reaction vessels 14 are placed.

The conveying mechanism 8 is movable in a planar direction (front-rear and left-right directions) and a Z-axis direction (an up-down direction), and is movable above the tip rack 7, a part of the incubator 9, the sample dispensing tip buffer 11, and the disposal hole 12. As the conveying mechanism 8, for example, a three-axis robot can be used. The conveying mechanism 8 grips the reaction vessels 14 one by one from the tip rack 7 and moves the reaction vessels 14 to the incubator 9. The conveying mechanism 8 grips the sample dispensing tips 10 one by one from the tip rack 7 and moves the sample dispensing tips 10 to the sample dispensing tip buffer 11.

The sample dispensing tip buffer 11 is a buffer on which the unused sample dispensing tips 10 conveyed from the tip rack 7 by the conveying mechanism 8 are temporarily placed. The sample dispensing tip buffer 11 is implemented such that the plurality of sample dispensing tips 10 can be placed thereon.

The incubator 9 has a substantially disc shape and is rotatable. The incubator 9 can hold the plurality of reaction vessels 14 along a circumferential direction, and each reaction vessel 14 can be moved to a predetermined position by the rotation of the incubator 9.

The sample dispensing mechanism 6 moves to a position above the sample dispensing tip buffer 11 to mount any one of the sample dispensing tips 10, and moves to a position above the sample 5a to aspirate the sample 5a into the sample dispensing tip 10. Thereafter, the sample dispensing mechanism 6 moves to a position above the reaction vessel 14 held on the incubator 9, and discharges the sample 5a from the inside of the sample dispensing tip 10 into the reaction vessel 14. Thereafter, the sample dispensing mechanism 6 moves to a position above the disposal hole 12, separates the sample dispensing tip 10, and drops the sample dispensing tip 10 into the disposal hole 12.

The reagent cold storage 24 has a substantially cylindrical shape and accommodates the reagent disk 2 therein. An upper surface of the reagent cold storage 24 is provided with a reagent container loading port 20 for attaching and detaching reagent containers 3 to and from the reagent disk 2. The reagent container loading port 20 is provided with an opening and closing reagent container loading port lid (not shown). The reagent cold storage 24 has a heat insulating function for controlling the temperature of a reagent accommodated in the reagent container 3 inside the reagent cold storage 24 to be constant.

The reagent disk 2 is rotatable around a central axis extending in an up-down axis direction, and has a plurality of slots for holding the reagent container 3 along a circumferential direction. The slot holds the reagent container 3 such that a longitudinal direction of the reagent container 3 is a radial direction of the reagent disk 2. Therefore, a plurality of reagent containers 3 are radially held on the reagent disk 2. By rotating the reagent disk 2, the reagent container 3 is moved to a predetermined position. For example, by rotating the reagent disk 2, the reagent container 3 accommodating a target reagent can be moved to a reagent dispensing position 15a.

The reagent dispensing probe 15 is movable in the front-rear and left-right directions (a horizontal direction) and the up-down direction by, for example, an actuator. The reagent dispensing probe 15 aspirates, by a reagent dispensing pipette (not shown), a predetermined amount of reagent from the reagent container 3 positioned at the reagent dispensing position 15a, and dispenses the reagent into the reaction vessel 14 held on the incubator 9.

The reaction vessel 14 into which the predetermined reagent and the sample 5a are dispensed is managed at a predetermined temperature by the incubator 9, and is stirred by the stirring mechanism 9a as necessary to promote a reaction for a predetermined time.

A reaction solution subjected to the reaction promotion by the incubator 9 is sent to the pretreatment device 13 by a transfer device (not shown) together with the reaction vessel 14, and a series of operations such as stirring of the reaction solution, supply of the reaction solution to the detection device 19, and disposal of the reaction solution and the reaction vessel 14 for which a measurement is completed are performed. Depending on a type of measurement, one reaction vessel 14 may be used for a plurality of measurements. In this case, after the reaction solution in the reaction vessel 14 for which analyses are completed is disposed, the reaction vessel 14 is washed.

Examples of physical characteristics of the reaction solution to be detected by the detection device 19 include, but are not limited to, a light emission amount, a scattered light amount, a transmitted light amount, a current value, and a voltage value. The detection device 19 is not limited to measuring the reaction solution supplied from the reaction vessel 14, and may perform the measurement while the reaction solution is held in the reaction vessel 14.

A host computer 200 is connected to the automatic analyzer 1, and a series of operations of the above configuration of the automatic analyzer 1 are controlled by the host computer 200.

The automatic analyzer 1 can efficiently analyze a plurality of analysis items for a plurality of samples by combining or repeating the operations described above under the control executed by the host computer 200.

Here, an opening and closing lid device provided to cover a region cover 23 (an outer cover) and a region (a first region) constituting the pretreatment device 13 provided on the work surface 22 on the housing 21, and the safety cover 4 that covers a work region (a second region) on the work surface 22 will be described in more detail.

A front side of the safety cover 4 is provided with a handhold portion 27 which is a concave portion into which fingers are inserted when opening the safety cover 4 from a closed position. The safety cover 4 is pivotally supported around the cover support shaft 26 provided along the left-right direction on the upper portion of the rear surface of the housing 21, and is rotatable (openable and closable) between a fully opened position and a closed position. When the safety cover 4 is opened, brought into contact with a stopper (not shown), and supported by a support mechanism (not shown) so as not to be closed due to own weight, the safety cover 4 is held in the fully opened position, and thus the operator can insert an arm or an upper body from a gap between the work surface 22 and the front side of the safety cover 4 to perform work on the work surface 22 which includes internal cleaning and replacement of consumables of the pretreatment device 13. During the work for the pretreatment device 13, the operator opens an opening and closing lid 16 (described later) provided in an opening portion of the region cover 23 to access the inside.

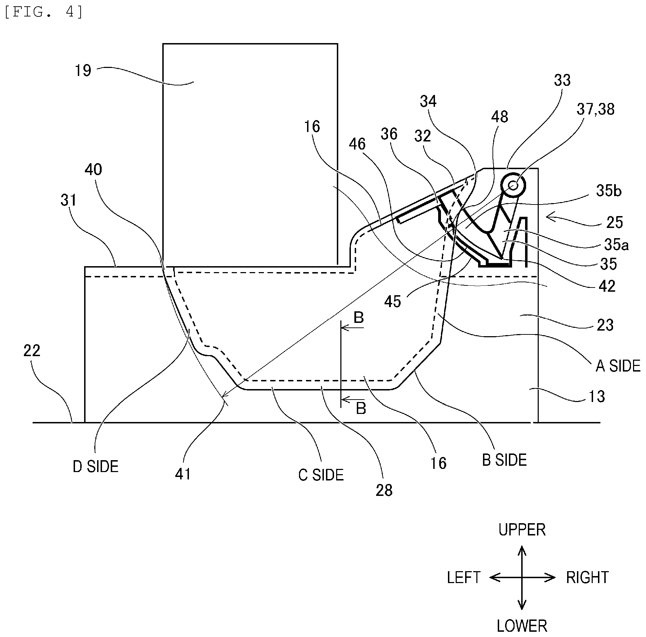

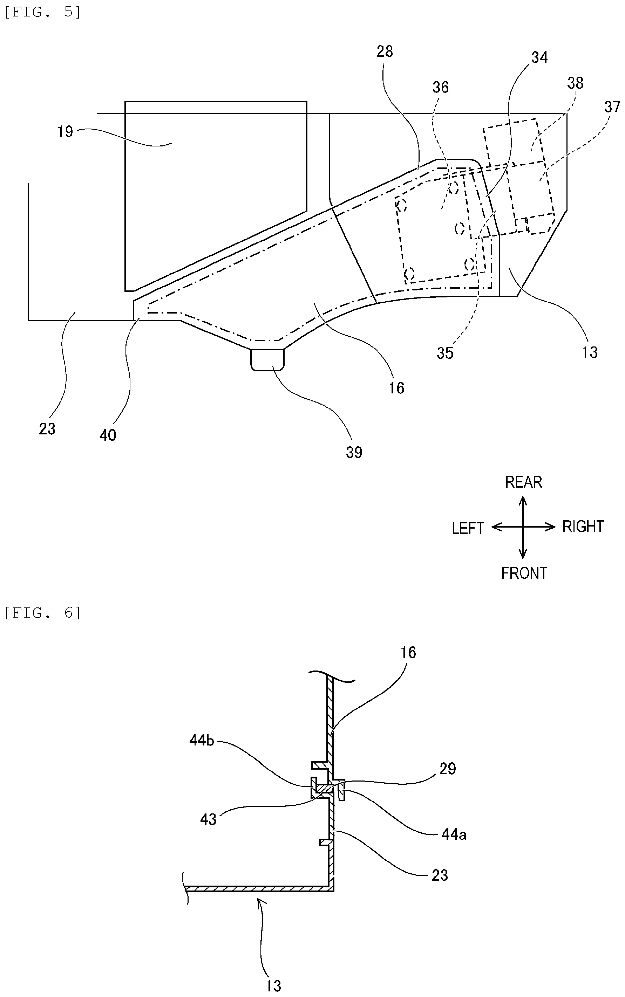

FIGS. 4 and 5 are enlarged views showing the extracted pretreatment device of the automatic analyzer, in which FIG. 4 is a front view serving as a partial perspective view showing the vicinity of a rotation center portion of the opening and closing lid, and FIG. 5 is a plan view. FIG. 6 is a cross-sectional view taken along a line B-B in FIG. 4 and showing an enlarged boundary portion between the opening and closing lid in a fully closed position and the region cover.

The pretreatment device 13 is implemented in an internal region (the first region) of the box-shaped region cover 23 placed on the work surface 22 (that is, formed in a convex shape upward from the work surface). The pretreatment device 13 performs, as a series of analysis treatments on the sample, pretreatments for accurately measuring physical characteristics in the detection device 19 positioned in a subsequent stage, and includes therein a specimen container conveying mechanism, a specimen container stirring mechanism, a disposal unit that disposes of a specimen or a reaction vessel for which a measurement is completed, and the like.

The pretreatment device 13 includes a temperature adjustment device (not shown) such as a heater or a cooling element, and can maintain the inside of the region cover 23 at a predetermined temperature. The region cover 23 constituting an outer surface of the pretreatment device 13 is provided with the opening portion from a part of an upper surface to a front surface of the region cover 23, and the opening portion is provided with the opening and closing lid 16 that can be opened upward. By opening the opening and closing lid 16 (setting the opening and closing lid 16 to a fully opened position), the operator can access the inside of the pretreatment device 13, and can perform internal cleaning, component replacement, and the like of the pretreatment device 13, periodically or as necessary.

As shown in FIGS. 4 and 5, inside the region cover 23 formed in a further convex shape on an upper right portion of the pretreatment device 13, a hinge portion 25 is formed which includes an arm portion 35 (a support arm) that connects, through the opening portion provided in the region cover 23, a surface close to the inside of the pretreatment device 13 (the first region) of the opening and closing lid 16 and a support shaft 37 provided inside the region cover 23 and rotatably supports the opening and closing lid 16 with respect to the support shaft 37.

A shape of an upper surface of the opening and closing lid 16 is, for example, a flat shape along a horizontal plane in a portion covering an upper surface of the pretreatment device 13 on a left side (a side far from the support shaft 37), a stepped shape rising upward toward a right side (a support shaft 37 side), and a shape connected to a hinge portion upper surface 33 positioned at an uppermost position via an inclined surface 32 inclined upward to the right along the hinge portion 25. An opening and closing lid rear end portion 34, which is a right end of the opening and closing lid 16, is provided at a position close to the hinge portion upper surface 33 in the inclined surface 32.

The opening and closing lid 16 is fixed to a mounting portion 36 provided at one end of the arm portion 35 from the inside of the pretreatment device 13. The other end of the arm portion 35 forms the support shaft 37, and is rotatably and pivotally supported by a support shaft bearing 38 provided in the vicinity of an upper right end of the hinge portion 25 placed on an upper portion of the pretreatment device 13. That is, the arm portion 35 and the opening and closing lid 16 integrally rotate around the support shaft 37 (the support shaft bearing 38).

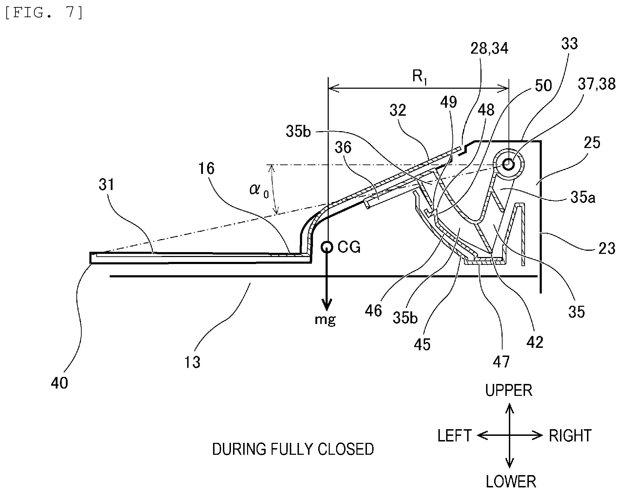

Assuming that an end portion (a left end portion) of the opening and closing lid 16 farthest from the support shaft 37 is a tip end portion (an opening and closing lid tip end portion 40) of the opening and closing lid 16, when the opening and closing lid 16 is in the fully closed position (fully closed), the support shaft 37 in the vicinity of the right end of the opening and closing lid 16 is higher than the opening and closing lid tip end portion 40 at the left end. That is, a straight line connecting the support shaft 37 and the opening and closing lid tip end portion 40 of the opening and closing lid 16 is a straight line oriented downward to the left, and an angle α0 formed by the straight line and a horizontal plane including the support shaft 37 is a depression angle when the opening and closing lid tip end portion 40 is viewed from the support shaft 37 (see FIG. 7 described later).

As shown in FIG. 4, a shape of an opening and closing lid boundary portion 28, which is a boundary between the opening and closing lid 16 and the pretreatment device 13, includes an A side of which an uppermost portion in a front view extends downward from the left side of the support shaft 37 while being inclined to the left almost vertically, a B side continuously connected to a lower end of the A side and extending leftward and downward while forming a gentler angle with respect to the horizontal direction than that of the A side, a C side continuously connected to a lower end of the B side and extending leftward in the vicinity of a lower surface of the pretreatment device 13, and a D side extending leftward and upward from a left end portion of the C side and reaching the opening and closing lid tip end portion 40. A bent portion or the like may be provided in the middle of the D side, and it is necessary to form the bent portion so as to be positioned on an inner circumferential side with respect to at least an outer circumferential arc 41 which is an arc passing through the opening and closing lid tip end portion 40 about the support shaft 37, so that when the opening and closing lid 16 is opened and closed, the D side of the opening and closing lid 16 is prevented from interfering with a D side of the region cover 23 or the opening and closing lid tip end portion 40. In this way, a shape of a lower edge portion of the opening and closing lid 16 in the front view is a substantially U-shape in which a right side is longer than a left side.

As shown in FIG. 5, a planar shape of the opening and closing lid 16 in a top view is a shape avoiding the detection device 19 around the pretreatment device 13 and an operation trajectory of the sample dispensing mechanism 6 or the like having a rotary arm shape. The opening and closing lid 16 includes a knob portion 39 formed in a convex shape frontward at a portion closest to a front surface, and the knob portion 39 can be used for easily opening and closing the opening and closing lid 16 by being pinched by fingers when the operator opens and closes the opening and closing lid 16.

As shown in FIG. 6, an airtight member 29 made of, for example, sponge rubber is attached to an outer periphery of the opening and closing lid 16, that is, the opening and closing lid boundary portion 28 without a gap over the entire periphery, and in a state in which the opening and closing lid 16 is closed (that is, in a fully closed state), the inside of the pretreatment device 13 is sealed to prevent entry of outside air and outflow of inside air, so that the temperature inside the pretreatment device 13 is maintained constant and entry of external light is also blocked. In the opening and closing lid boundary portion 28, if a cover portion (ribs 44a and 44b) is formed by providing the rib 44a downward along an outer side of the airtight member 29 on the outer periphery of the opening and closing lid 16 and the rib 44b upward along an inner side of the airtight member 29 on an edge of the opening portion of the region cover 23, due to a so-called labyrinth effect, inflow of air is further hindered, and external light can be blocked more reliably.

By performing a series of treatments in the pretreatment device 13 in a state in which the temperature inside the pretreatment device 13 is maintained at a predetermined temperature and the entry of external light is prevented, the measurement accuracy of physical characteristics in the detection device 19 is improved. Therefore, after the inside of the pretreatment device 13 is cleaned, it is required to reliably close the opening and closing lid 16 and then close the safety cover 4. More preferably, even if the operator forgets to close the opening and closing lid 16 and leaves the opening and closing lid 16 opened, the opening and closing lid 16 is closed in conjunction with closing of the safety cover 4.

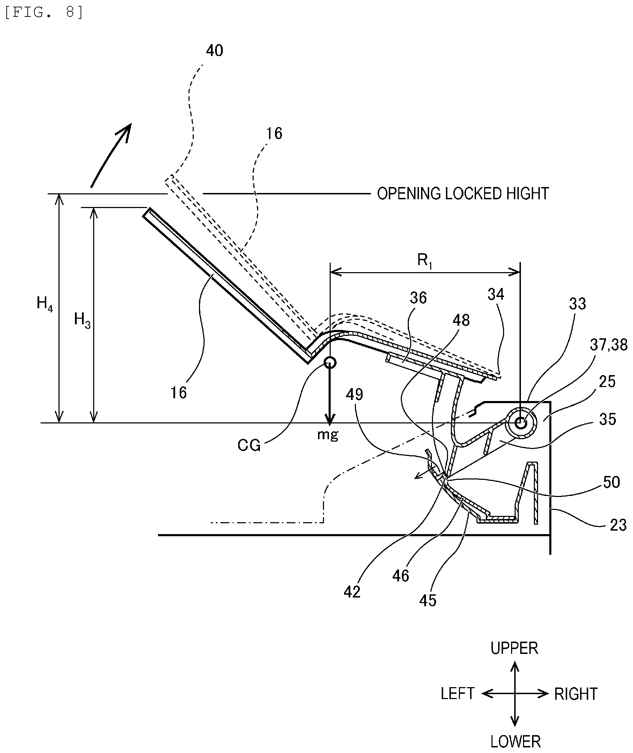

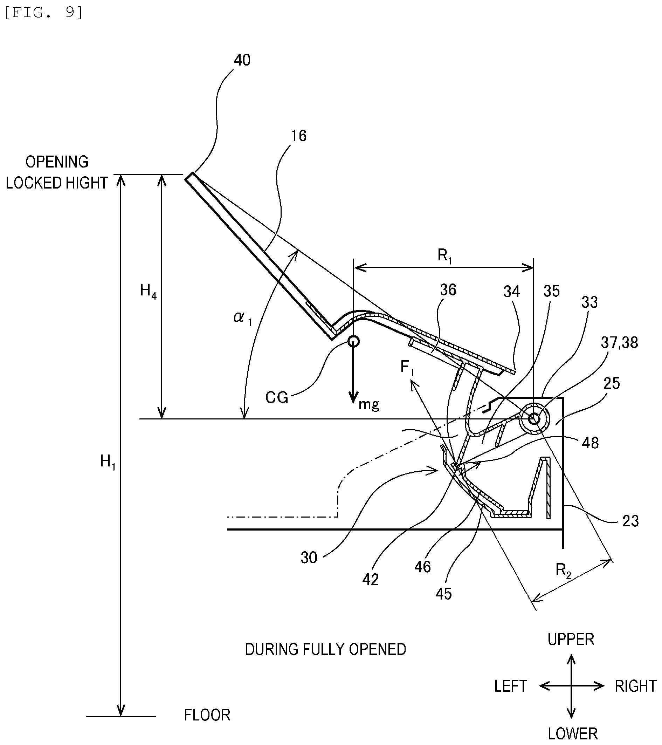

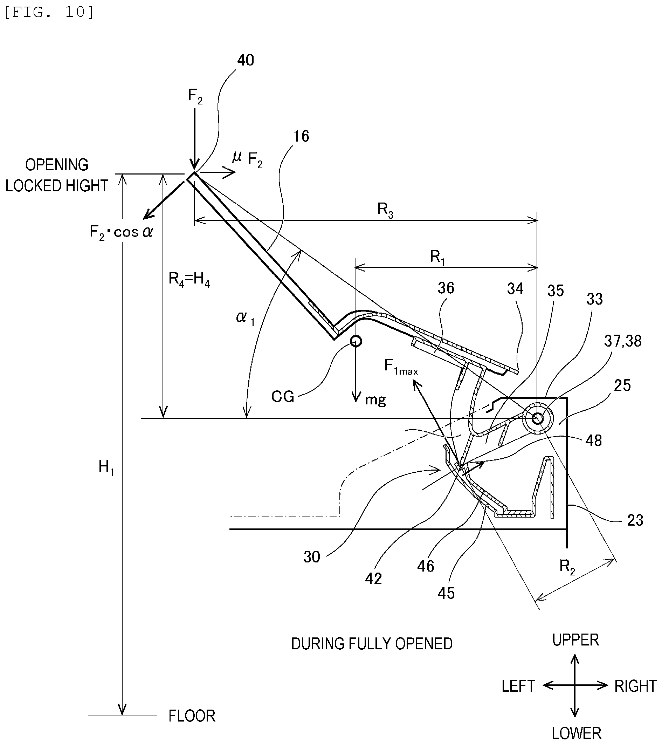

FIGS. 7 to 10 are cross-sectional views showing the extracted hinge portion, in which FIG. 7 shows a case in which the opening and closing lid is in the fully closed position, FIG. 8 shows a state in which the opening and closing lid is rotated from the fully closed position to the fully opened position, and FIGS. 9 and 10 show a case in which the opening and closing lid is in the fully opened position, respectively.

As shown in FIGS. 7 to 10, the arm portion 35 has a substantially V shape in the front view, the mounting portion 36 for fixing the opening and closing lid 16 by, for example, screwing is formed on a left end side of the V shape, and the support shaft 37 serving as a rotation center of an opening and closing operation integrally with the opening and closing lid 16 is formed on a right end side of the V shape. A corner portion 42 at a lower end of the V-shaped arm portion 35 constitutes a lock mechanism 30 that holds the opening and closing lid 16 in a fully opened state together with a biasing member 46 described later. A portion from the support shaft 37 to the corner portion 42 is referred to as a first arm portion 35a, and a portion from the corner portion 42 to the mounting portion 36 is referred to as a second arm portion 35b. The first arm portion 35a has a substantially linear shape from the support shaft 37 to the corner portion 42 in the front view, and the second arm portion 35b is curved upward and substantially forms a part of a cylindrical surface centered on the support shaft 37.

From the fully closed state to the fully opened state of the opening and closing lid 16, the second arm portion 35b is provided within a range opened by the opening and closing lid 16 in the region cover 23, and is implemented as a so-called take-out hinge. When the opening and closing lid 16 is closed (when the opening and closing lid 16 is moved to the fully closed position), the second arm portion 35b enters the inside of the opening portion together with the mounting portion 36, and thus the opening and closing lid boundary portion 28 between the opening and closing lid 16 and the region cover 23 can form a closed curve continuous over the entire periphery of the opening and closing lid. Therefore, due to the airtight member 29 provided along the boundary portion, it is possible to prevent entry of external light while maintaining airtightness when the opening and closing lid 16 is closed.

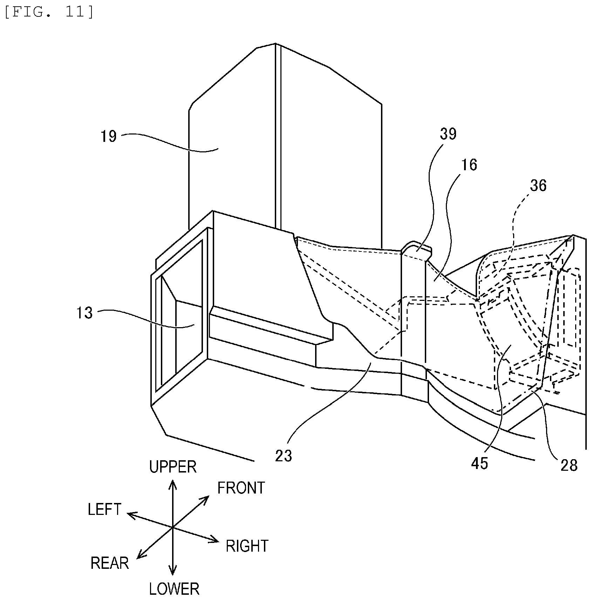

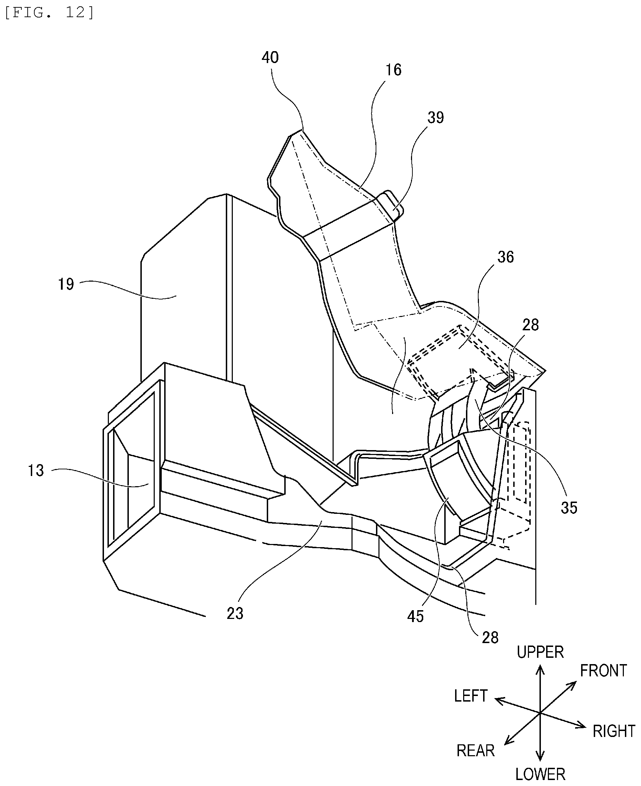

FIGS. 11 and 12 are lower perspective views showing the extracted pretreatment unit, in which FIG. 11 shows a case in which the opening and closing lid is in the fully closed position, and FIG. 12 shows a case in which the opening and closing lid is in the fully opened position.

As shown in FIGS. 11 and 12, the hinge portion 25 is provided with a lower cover 45 that is fixed by being suspended from an upper surface of the hinge portion 25 and is provided to cover a lower surface, a front surface, and a rear surface of the arm portion 35 when the opening and closing lid 16 is closed. A left surface of the lower cover 45 is curved upward along the second arm portion 35b, and substantially forms a part of the cylindrical surface centered on the support shaft 37. The support shaft bearing 38 may be provided integrally with the lower cover 45. For example, even when a foreign matter such as abrasion powder is generated from the rotation shaft (the support shaft 37 and the support shaft bearing 38) by the opening and closing operation of the opening and closing lid 16, the foreign matter falls onto the lower cover 45, and thus the foreign matter can be prevented from falling into the specimen or the reagent in the pretreatment device 13.

As shown in FIGS. 7 to 10, the biasing member 46 curved along the lower cover 45 is provided between a left surface of the lower cover 45 and the second arm portion 35b. One end on a lower right side of the biasing member 46 is fixed to a lower cover bottom surface 47 by, for example, screwing or snap-fitting, and the other end curved upward along the lower cover 45 has a cantilever bent beam shape and is provided with a claw portion 48 which is a protruding portion facing the support shaft 37. An upper surface of the claw portion 48 is formed as a flat lock surface 49 facing substantially in the direction of the support shaft 37, and a slanting surface 50 is formed downward from the claw portion 48. As shown in FIG. 7, when the opening and closing lid 16 is in the fully closed position, the claw portion 48 of the biasing member 46 is not in contact with the second arm portion 35b.

In the present embodiment, the lower cover 45, the biasing member 46, the arm portion 35, and the opening and closing lid 16 may be made of resin, and for example, if the opening and closing lid 16 is made of acrylonitrile butadiene (ABS) resin, and the lower cover 45, the biasing member 46, and the arm portion 35 are made of polyacetal (POM) resin, there is an effect of reducing the number of components and realizing simplification and cost reduction.

When the opening and closing lid 16 is moved from the fully closed position shown in FIG. 7 to the fully opened position shown in FIG. 9 via the position shown in FIG. 8, the operator lifts the knob portion 39 to open the opening and closing lid 16. When the opening and closing lid tip end portion 40 of the opening and closing lid 16 reaches a tip end height H3 with the support shaft 37 as a reference, the corner portion 42 of the V-shaped arm portion 35 comes into contact with the slanting surface 50 of the biasing member 46, and the biasing member 46 is elastically deformed so that the claw portion 48 moves in a direction away from the support shaft 37. Further, when the height of the opening and closing lid tip end portion 40 reaches an opening lock height H4 (> H3) or more, the corner portion 42 climbs over the claw portion 48 of the biasing member 46, and the claw portion 48 returns in a direction approaching the support shaft 37 by an elastic force of the biasing member 46. At this time, the corner portion 42 of the arm portion 35 is positioned at a position higher than the lock surface 49 of the biasing member 46. In this state, if the operator releases the hand from the knob portion 39 of the opening and closing lid 16, the corner portion 42 of the arm portion 35 is placed on the lock surface 49. A biasing force applied to the arm portion 35 by the biasing member 46 is implemented such that a support moment due to a reaction force generated from the lock surface 49 of the biasing member 46 to the corner portion 42 is larger than a moment at which the opening and closing lid 16 is closed due to the own weight, thereby maintaining the opening and closing lid 16 in the fully opened state (in the fully opened position). That is, the opening lock height H4 is a height of the opening and closing lid tip end portion 40 when the opening and closing lid 16 is maintained in the fully opened state by the action of the lock mechanism 30 including the corner portion 42 of the arm portion 35 and the biasing member 46. The height of the opening and closing lid tip end portion 40 from a floor surface in the fully opened position is H1 as shown in FIGS. 3 and 9.

As shown in FIG. 9, if a gravity center position of the opening and closing lid 16 is CG, a horizontal distance from the support shaft 37 to the gravity center CG is R1, the own weight of the opening and closing lid 16 is m, a gravitational acceleration is g, and a distance from the support shaft 37 to the corner portion 42 is R2, a closing moment due to the own weight is mg × R1, and a reaction force F1 generated at the corner portion 42 can be obtained by dividing the closing moment due to the own weight by the rotation radius R2, and is expressed as F1 = mg × R1/R2.

At this time, a straight line connecting the support shaft 37 and the opening and closing lid tip end portion 40 of the opening and closing lid 16 is a straight line oriented upward to the left, and an angle α1 formed by the straight line and the horizontal plane including the support shaft 37 is an elevation angle when the opening and closing lid tip end portion 40 is viewed from the support shaft 37. The height from the floor surface to the opening and closing lid tip end portion 40 is H1.

That is, when the height of the opening and closing lid tip end portion 40 is H3 or less, a positional relation is established in which the support moment implemented by the lock surface 49 of the biasing member 46 does not act on the corner portion 42 of the arm portion 35, and thus the opening and closing lid 16 is not locked and is closed due to the own weight. When the height of the opening and closing lid tip end portion 40 is higher than H4, the corner portion 42 is held by the lock surface 49, and the opening and closing lid 16 is locked in the fully opened state (in the fully opened position).

In the fully opened state, for example, when the opening and closing lid tip end portion 40 of the opening and closing lid 16 is lowered by being pressed from above until the height becomes H3 or less, a fully opening lock by the lock mechanism 30 is released, and the opening and closing lid 16 is closed due to the own weight and rotates to the fully closed position. Hereinafter, the height H3 is referred to as an opening lock release height.

When a force F2 is applied downward to the opening and closing lid tip end portion 40 in the fully opened state, a closing moment applied to the opening and closing lid 16 is a sum of an own weight moment and a product of the force F2 and a horizontal distance R3 from the support shaft 37 to the opening and closing lid tip end portion 40, and is expressed as (mg × R1) + (F2 × R3).

Although the corner portion 42 receives the reaction force F1 from the lock surface 49 and maintains the opening and closing lid 16 in the fully opened state, the reaction force F1 generated by the biasing member 46 is limited. When an allowable maximum value F1max or more is applied, the biasing member 46 is deflected in a direction away from the support shaft 37, and the corner portion 42 is disengaged from the lock surface 49, whereby the opening and closing lid 16 is closed from the fully opened state due to the own weight.

That is, when the downward closing force F2 is applied to the opening and closing lid tip end portion 40 in the fully opened state and a relation of [(mg × R1) + (F2 × R3)] > (F1max × R2) is established, the fully opening lock is released and the opening and closing lid 16 is closed due to the own weight and return to the fully closed position (see FIG. 7).

That is, rigidity of the biasing member 46 and dimensions of the claw portion 48 and the lock surface 49 are determined such that the fully opened state can be maintained by supporting the closing moment due to the own weight when the opening and closing lid 16 is fully opened, and the lock is released and the opening and closing lid 16 is closed due to the own weight when a downward closing force is applied to the opening and closing lid tip end portion 40.

As shown in FIG. 10, when the safety cover 4 is closed in the fully opened state of the opening and closing lid 16 and the opening and closing lid tip end portion 40 comes into contact with the inside of the safety cover 4, in addition to the downward reaction force F2 generated during the contact, a frictional force (µ × F2) is applied in a direction orthogonal to the reaction force F2 in which the closing operation of the opening and closing lid 16 is hindered, that is, in the rightward direction. The coefficient µ used for calculating the frictional force is a frictional coefficient of a contact portion. A product of a height R4 of the opening and closing lid tip end portion 40 from the support shaft and the frictional force (µ × F2), that is, (R4 × µ × F2), is a frictional moment around the support shaft 37 generated by the frictional force, and the direction thereof acts in a clockwise direction, that is, acts in a direction in which the closing operation of the opening and closing lid 16 is hindered. Here, an opening angle α1 of the opening and closing lid 16 is an angle formed by the horizontal and the straight line connecting the support shaft 37 and the opening and closing lid tip end portion 40. When the opening angle α1 increases, that is, when the opening angle of the opening and closing lid 16 increases, the horizontal distance R3 of the opening and closing lid tip end portion 40 from the support shaft 37 decreases, and thus the closing moment decreases. On the other hand, since the height R4 of the opening and closing lid tip end portion 40 from the support shaft 37 increases, the frictional moment increases. Therefore, when the opening angle α1 of the opening and closing lid 16 is increased more than necessary and the frictional coefficient µ between the opening and closing lid tip end portion 40 and an inner surface of the safety cover 4 that is in contact with the opening and closing lid tip end portion 40 is increased, the frictional moment becomes larger than the closing moment, and the opening and closing lid 16 becomes a so-called strut rod, and a condition that the opening and closing lid 16 is not closed even when pressed from above is established. Therefore, in order to avoid such a state, the opening angle α1 of the opening and closing lid 16 is, for example, about 45° or less so as not to become excessively large. A contact surface between the opening and closing lid tip end portion 40 and the inner surface of the safety cover 4 that is in contact with the opening and closing lid tip end portion 40, is implemented with a member that is smooth and has a small frictional coefficient, for example, a stainless steel plate, and has a shape without unevenness or a step.

As shown in FIG. 3, the height H1 of the opening and closing lid tip end portion 40 of the opening and closing lid 16 when fully opened is set to be larger than an upper surface height H2 when the safety cover 4 is closed. That is, when the safety cover 4 is closed while the opening and closing lid 16 is in the fully opened position, an inner side of an upper surface of the safety cover 4 comes into contact with the opening and closing lid tip end portion 40 of the opening and closing lid 16, and the opening and closing lid tip end portion 40 is forcibly pushed down to the height H3 or less. The biasing member 46 is deformed elastically, the corner portion 42 of the arm portion 35 is disengaged from the lock surface 49 of the claw portion 48, and the opening and closing lid 16 is closed due to the own weight. That is, even when the operator forgets to close the opening and closing lid 16, the opening and closing lid 16 is reliably closed when the safety cover 4 is closed. Therefore, the periphery of the opening and closing lid 16 of the pretreatment device 13 is airtightly sealed by the airtight member 29, light is shielded and the temperature is adjusted inside the pretreatment device 13, and thus an automatic analyzer with high reliability can be provided.

Actions and effects of the present embodiment having the above configuration will be described with reference to a comparative example.

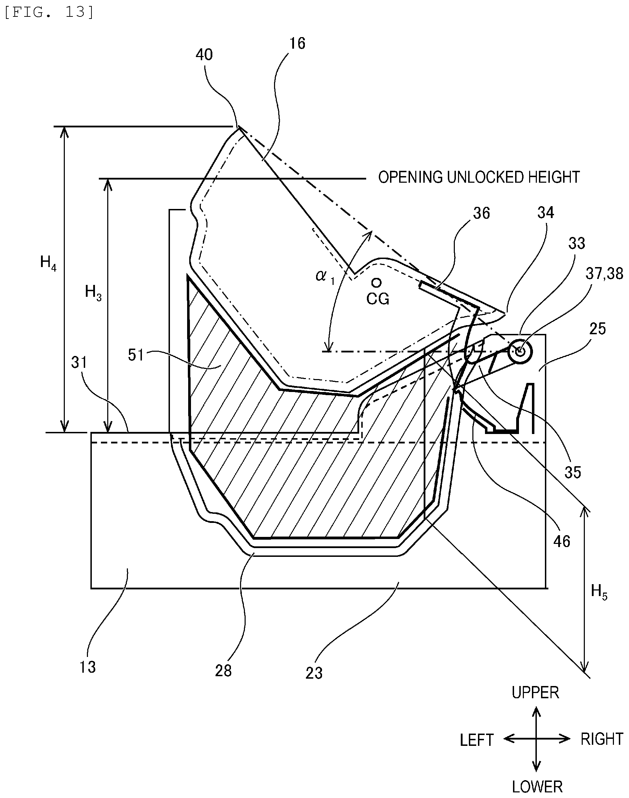

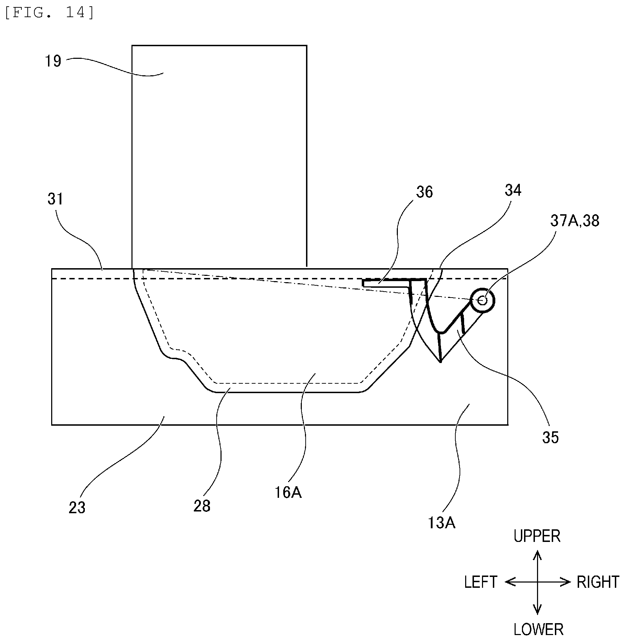

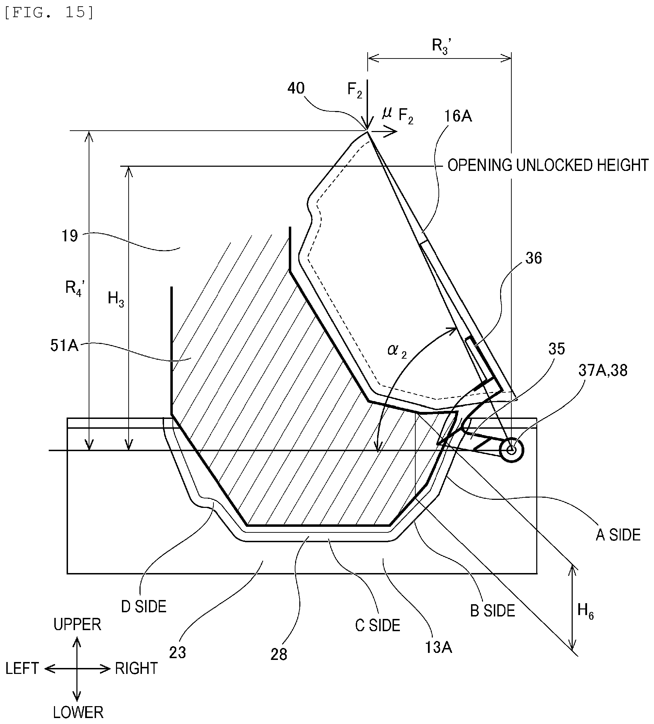

FIG. 13 is a front view showing the extracted pretreatment device according to the present embodiment and showing a state in which the opening and closing lid is in the fully opened position. FIGS. 14 and 15 are front views showing a configuration of a pretreatment device shown as a comparative example with respect to the present embodiment, in which FIG. 14 shows a state in which an opening and closing lid is in a fully closed position, and FIG. 15 shows a state in which the opening and closing lid is in a fully opened position.

As shown in FIG. 13, in the pretreatment device 13 according to the present embodiment, the position of the support shaft 37A is provided in the vicinity of an upper end of the region cover 23 further formed in an upward convex shape on the upper portion of the pretreatment device 13 (that is, the inside of the upward convex shape), and the opening and closing lid 16 in the fully closed position is provided downward to the left. Meanwhile, as shown in FIGS. 14 and 15, in a pretreatment device 13A according to the comparative example, the region cover 23 is not provided with an upper protrusion, the support shaft 37 is provided in the vicinity of an upper right end of the pretreatment device 13A, and an opening and closing lid 16A in the fully closed position is provided at the same height as a pretreatment unit upper surface 31.

As shown in FIG. 13, in the pretreatment device 13 according to the present embodiment, when the opening and closing lid 16 is in the fully opened position, an outline of an opening generated between a lower side of the opening and closing lid 16 and the pretreatment device 13 is an opening region 51, and is indicated by hatching. The opening region 51 is an opening for the operator to perform internal cleaning or the like of the pretreatment device. In the pretreatment device 13 according to the present embodiment, since the support shaft 37 is positioned at a position higher than the pretreatment device 13 (a position higher than the pretreatment unit upper surface 31), and the opening and closing lid 16 has a substantially U-shape in which the right side is longer than the left side in the front view, when the opening and closing lid 16 is in the fully opened position, a height H5 of the opening region 51 in the up-down direction is substantially constant over an entire range of the opening region 51 in the left-right direction including the vicinity of the support shaft 37, and an opening space sufficient for performing internal cleaning work is obtained.

Meanwhile, as shown in FIGS. 14 and 15, in the pretreatment device 13A according to the comparative example, the region cover 23 is not provided with the upper protrusion, and the support shaft 37A is provided in the vicinity of the upper right end of the pretreatment device 13A. Therefore, a straight line connecting the opening and closing lid tip end portion 40 and the support shaft 37A is upward to the left in the fully closed position of the opening and closing lid 16A, and is also upward to the left in the fully opened position. In the pretreatment device 13A according to the comparative example, in order to make the height of the opening and closing lid tip end portion 40 of the opening and closing lid 16A higher than a release height of a fully opening lock, since the height of the support shaft 37A is low, it is necessary to make an opening angle α2 of the opening and closing lid 16 larger (for example, α2 > α1). As a result, a horizontal distance R3' from the opening and closing lid tip end portion 40 to the support shaft 37A is smaller than the horizontal distance R3 in the case in which the support shaft position is high (that is, R3' < R3).

However, as described above, when the opening angle α2 is increased and the horizontal distance R3'from the opening and closing lid tip end portion 40 to the support shaft 37A is decreased, a closing moment when the closing force F2 from above is applied to the opening and closing lid tip end portion 40 is decreased, and a height R4'from the opening and closing lid tip end portion 40 to the support shaft is increased, and a frictional moment R4'× µ × F2 due to a frictional force is increased. Therefore, the frictional moment becomes larger than the closing moment, and the opening and closing lid 16A becomes a so-called strut rod, which is likely to be a condition under which the opening and closing lid 16A is not closed even when pressed from above, and closing reliability of the opening and closing lid 16A is significantly reduced.

Regarding an opening region 51A (indicated by hatching in FIG. 15) in the case in which the opening and closing lid 16A of the pretreatment device 13A according to the comparative example is in the fully opened position, since an opening height H6 is small in the vicinity of the support shaft 37A, an opening sufficient for performing internal cleaning work cannot be obtained.

On the other hand, in the present embodiment, the hinge portion 25 is placed on the upper portion of the pretreatment device 13, and the position of the support shaft 37 is provided above the pretreatment device 13, so that the opening and closing lid 16 is directed downward to the left in the fully closed position and is directed upward to the left in the fully opened position. Therefore, the opening region 51 sufficient for the operator can be obtained in the fully opened position, and the opening and closing lid 16 can be reliably closed (that is, rotated to the fully closed position) when the opening and closing lid tip end portion 40 is pressed from above in the fully opened position, and thus the opening and closing lid 16 having high reliability and easy to use can be obtained.

For example, in the present embodiment, since the opening and closing lid tip end portion 40 is provided on the left side of the support shaft 37, the opening and closing lid 16 is directed downward to the left in the fully closed position and upward to the left in the fully opened position, whereas for example, in an embodiment in which the opening and closing lid tip end portion 40 is provided on the right side of the support shaft 37, the opening and closing lid 16 is directed downward to the right in the fully closed position and upward to the right in the fully opened position.

### Reference Signs List

1: automatic analyzer
2: reagent disk
3: reagent container
4: safety cover
5: sample conveying mechanism
5a: sample
6: sample dispensing mechanism
7: tip rack
8: conveying mechanism
9: incubator
9a: stirring mechanism
10: sample dispensing tip
11: sample dispensing tip buffer
12: disposal hole
13, 13A: pretreatment device
14: reaction vessel
15: reagent dispensing probe
15a: reagent dispensing position
16, 16A: opening and closing lid
17: cleaning mechanism
19: detection device
20: reagent container loading port
21: housing
22: work surface
23: region cover
24: reagent cold storage
25: hinge portion
26: cover support shaft
27: handhold portion
28: opening and closing lid boundary portion
29: airtight member
30: lock mechanism
31: pretreatment unit upper surface
32: inclined surface
33: hinge portion upper surface
34: opening and closing lid rear end portion
35: arm portion
35a: first arm portion
35b: second arm portion
36: mounting portion
37, 37A: support shaft
39: knob portion
40: opening and closing lid tip end portion
42: corner portion
44a, 44b: rib
45: lower cover
46: biasing member
47: lower cover bottom surface
48: claw portion
49: lock surface
50: slanting surface
51, 51A: opening region
55: housing frame
56: front plate
57: left and right side plates
58: rear plate
200: host computer

## Claims

1. An opening and closing lid device configured to be provided to cover a region cover (23) and a first region provided on a work surface (22) of a housing (21) accommodating at least a part of functional portions of an analyzer (1), the opening and closing lid device comprising:
an opening and closing lid (16, 16A) configured to cover and freely open or close an opening portion provided on the region cover (23) to access an inside of the first region from an outside;
a support arm (35) configured to connect, through the opening portion, a surface close to the first region of the opening and closing lid (16, 16A) and a support shaft (37, 37A) provided inside the first region and rotatably support the opening and closing lid (16, 16A) with respect to the support shaft (37, 37A); **characterized by** :
an opening holding mechanism including a lock mechanism (30) provided at the support arm (35) and a biasing member (46); and
a lower cover (45) that is separated from and covers the support shaft (37, 37A) and the opening holding mechanism from below, wherein:
the support arm (35) has a substantially V shape when viewed along the axis of the support shaft (37, 37A);
the lock mechanism (30) is formed by a corner portion (32) provided at a lower end of the support arm (35);
one end of the biasing member (46) is fixed to a bottom surface (47) of the lower cover (45) and the other end curves upwards along the lower cover (45) and has a cantilever bent beam shape;
the biasing member (46) is provided with a claw portion (48) which is a protruding portion facing the support shaft (37, 37A);
an upper surface of the claw portion (48) is formed as a flat lock surface (49) facing substantially in the direction of the support shaft (37, 37A), and a slanting surface (50) is formed downward from the claw portion (48);
the opening holding mechanism is configured to hold the support arm (35) so as to hold the opening and closing lid (16, 16A) in a fully opened position when an end of the opening and closing lid (16, 16A) at a side away from the support shaft (37, 37A) is moved to a position higher than a predetermined reference height, and release holding of the support arm (35) so that the opening and closing lid (16, 16A) moves to a fully closed position due to own weight when the end of the opening and closing lid (16, 16A) is pressed down below the reference height;
the biasing member (46) is configured to apply to the lock mechanism (30) a holding force for preventing the opening and closing lid (16, 16A) from moving to the fully closed position due to own weight when the opening and closing lid (16, 16A) is in the fully opened position; and
the opening and closing lid (16, 16A) is configured to be held by the opening holding mechanism such that the end at the side away from the support shaft (37, 37A) is higher than the other end at a side close to the support shaft (37, 37A) in the fully opened position and the other end is higher than the end in the fully closed position.

2. The opening and closing lid device according to claim 1, wherein
the other end of the opening and closing lid (16, 16A) is positioned above the support shaft (37, 37A) in both the fully opened position and the fully closed position.

3. The opening and closing lid device according to claim 1, wherein
the opening holding mechanism is configured to release biasing to the lock mechanism (30) applied by the biasing member (46) so that the opening and closing lid (16, 16A) moves to the fully closed position due to own weight when the end of the opening and closing lid (16, 16A) in the fully opened position is pressed down with a force equal to or larger than a predetermined force.

4. The opening and closing lid device according to claim 1, further comprising:
an airtight member (29) that is provided at a boundary between the opening and closing lid (16, 16A) in the fully closed position and the region cover (23) and is configured to prevent inflow and outflow of air from occurring between the inside and the outside of the first region and prevent light from entering the inside of the first region.

5. An automatic analyzer (1) comprising:
a sample container conveying mechanism (5) on which a sample container accommodating a sample to be analyzed is to be placed and conveyed;
a reagent container holding mechanism on which a reagent container (3) accommodating a reagent for reacting with the sample is to be placed and held;
a reaction mechanism on which a reaction vessel (14) is to be placed, the sample (5a) and the reagent to be reacted in the reaction vessel (14);
a sample dispensing mechanism (6) that is configured to dispense the sample in the sample container into the reaction vessel (14);
a reagent dispensing mechanism (15) that is configured to dispense the reagent in the reagent container (3) into the reaction vessel (14);
a pretreatment device (13, 13A) that is configured to pre-treat a reaction solution of the sample and the reagent dispensed into the reaction vessel (14);
a measurement device that is configured to measure the reaction solution subjected to a pretreatment by the pretreatment device (13, 13A);
a region cover (23) that is provided to cover a first region including the pretreatment device (13, 13A); and
the opening and closing lid device according to claim 1.

## Patentansprüche

1. Vorrichtung mit sich öffnendem und schließendem Deckel, die ausgelegt ist, um bereitgestellt zu sein, um eine Bereichsabdeckung (23) und einen ersten Bereich, der auf einer Arbeitsoberfläche (22) eines Gehäuses (21) bereitgestellt ist, das zumindest einen Teil von funktionellen Abschnitten eines Analysegeräts (1) aufnimmt, zu bedecken, wobei die Vorrichtung mit sich öffnendem und schließendem Deckel Folgendes umfasst:
einen sich öffnenden und schließenden Deckel (16, 16A), der ausgelegt ist, um einen Öffnungsabschnitt, der auf der Bereichsabdeckung (23) bereitgestellt ist, zu bedecken und frei zu öffnen oder zu schließen, um auf ein Inneres des ersten Bereichs von einer Außenseite zuzugreifen;
einen Trägerarm (35), der ausgelegt ist, um durch den Öffnungsabschnitt eine Oberfläche in der Nähe des ersten Bereichs des sich öffnenden und schließendem Deckels (16, 16A) und einen Trägerschaft (37, 37A), der im Inneren des ersten Bereichs bereitgestellt ist und den sich öffnenden und schließenden Deckel (16, 16A) in Bezug auf den Trägerschaft (37, 37A) drehbar trägt, zu verbinden; **gekennzeichnet durch**:
einen Öffnungshaltemechanismus, der einen Verriegelungsmechanismus (30), der an dem Trägerarm (35) bereitgestellt ist, und ein Vorspannelement (46) umfasst; und
eine untere Abdeckung (45), die von dem Trägerschaft (37, 37A) und dem Öffnungshaltemechanismus von unten getrennt ist und diese bedeckt, wobei:
der Trägerarm (35) im Wesentlichen eine V-Form aufweist, wenn dieser entlang der Achse des Trägerschafts (37, 37A) betrachtet wird;
der Verriegelungsmechanismus (30) durch einen Eckabschnitt (32) ausgebildet ist, der an einem unteren Ende des Trägerarms (35) bereitgestellt ist;
ein Ende des Vorspannelements (46) an einer unteren Oberfläche (47) der unteren Abdeckung (45) befestigt ist und sich das andere Ende entlang der unteren Abdeckung (45) nach oben krümmt und eine gebogene Freiträgerform aufweist;
das Vorspannelement (46) mit einem Klauenabschnitt (48) bereitgestellt ist, der ein hervorstehender Abschnitt ist, der dem Trägerschaft (37, 37A) zugewandt ist;
eine obere Oberfläche des Klauenabschnitts (48) als eine flache Verriegelungsoberfläche (49) ausgebildet ist, die im Wesentlichen der Richtung des Trägerschafts (37, 37A) zugewandt ist, und eine abfallende Oberfläche (50) von dem Klauenabschnitt (48) nach unten ausgebildet ist;
der Öffnungshaltemechanismus ausgelegt ist, um den Trägerarm (35) zu halten, um den sich öffnenden und schließenden Deckel (16, 16A) in einer vollständig geöffneten Position zu halten, wenn ein Ende des sich öffnenden und schließenden Deckels (16, 16A) an einer Seite, abgewandt von dem Trägerschaft (37, 37A), in eine Position bewegt wird, die höher ist als eine vorbestimmte Referenzhöhe, und um das Halten des Trägerarms (35) freizugeben, sodass der sich öffnende und schließende Deckel (16, 16A) aufgrund seines Eigengewichts in eine vollständig geschlossene Position bewegt, wenn das Ende des sich öffnenden und schließenden Deckels (16, 16A) unter die Referenzhöhe nach unten gedrückt wird;
das Vorspannelement (46) ausgelegt ist, um eine Haltekraft auf den Verriegelungsmechanismus (30) auszuüben, um zu verhindern, dass sich der sich öffnende und schließende Deckel (16, 16A) aufgrund seines Eigengewichts in die vollständig geschlossene Position bewegt, wenn sich der sich öffnende und schließende Deckel (16, 16A) in der vollständig geöffneten Position befindet; und
der sich öffnende und schließende Deckel (16, 16A) ausgelegt ist, um durch den Öffnungshaltemechanismus gehalten zu werden, sodass das Ende an der Seite, die von dem Trägerschaft (37, 37A) abgewandt ist, höher ist als das andere Ende an einer Seite, die nahe an dem Trägerschaft (37, 37A) in der vollständig geöffneten Position ist, und das andere Ende höher ist als das Ende in der vollständig geschlossenen Position.

2. Vorrichtung mit sich öffnendem und schließendem Deckel nach Anspruch 1, wobei:
das andere Ende des sich öffnenden und schließenden Deckels (16, 16A) sowohl in der vollständig geöffneten Position als auch der vollständig geschlossenen Position oberhalb des Trägerschafts (37, 37A) angeordnet ist.

3. Vorrichtung mit sich öffnendem und schließendem Deckel nach Anspruch 1, wobei:
der Öffnungshaltemechanismus ausgelegt ist, um die Vorspannung des Verriegelungsmechanismus (30), die durch das Vorspannelement (46) angewendet wird, zu lösen, sodass der sich öffnende und schließende Deckel (16, 16A) sich aufgrund seines Eigengewichts in die vollständig geschlossene Position bewegt, wenn das Ende des sich öffnenden und schließenden Deckels (16, 16A) in der vollständig geöffneten Position mit einer Kraft, die größer oder gleich einer vorbestimmten Kraft ist, nach unten gedrückt wird.

4. Vorrichtung mit sich öffnendem und schließendem Deckel nach Anspruch 1, die ferner Folgendes umfasst:
ein luftdichtes Element (29), das an einer Grenze zwischen dem sich öffnenden und schließenden Deckel (16, 16A) in der vollständig geschlossenen Position und der Bereichsabdeckung (23) bereitgestellt ist, und ausgelegt ist, um ein Einströmen und Ausströmen von Luft zwischen dem Inneren und dem Äußeren des ersten Bereichs zu verhindern und um zu verhindern, dass Licht in das Innere des ersten Bereichs einfällt.

5. Automatisches Analysegerät (1), das Folgendes umfasst:
einen Probenbehälterbeförderungsmechanismus (5), auf dem ein Probenbehälter, der eine zu analysierende Probe aufnimmt, anzuordnen und zu befördern ist;
einen Reagensbehälterhaltemechanismus, auf dem ein Reagensbehälter (3), der ein Reagens zum Reagieren mit der Probe aufnimmt, anzuordnen und zu befördern ist;
einen Reaktionsmechanismus, auf dem ein Reaktionsgefäß (14) anzuordnen ist, wobei die Probe (5a) und das Reagens in dem Reaktionsgefäß (14) zu reagieren sind;
einen Probenabgabemechanismus (6), der ausgelegt ist, um die Probe in dem Probenbehälter in das Reaktionsgefäß (14) abzugeben;
einen Reagensabgabemechanismus (15), der ausgelegt ist, um das Reagens in dem Reagensbehälter (3) in das Reaktionsgefäß (14) abzugeben;
eine Vorbehandlungsvorrichtung (13, 13A), die ausgelegt ist, um eine Reaktionslösung der Probe und des Reagenses, das in das Reaktionsgefäß (14) abgegeben wird, vorzubehandeln;
eine Messvorrichtung, die ausgelegt ist, um die Reaktionslösung, die einer Vorbehandlung durch die Vorbehandlungsvorrichtung (13, 13A) unterzogen wird, zu messen;
eine Bereichsabdeckung (23), die bereitgestellt ist, um einen ersten Bereich, einschließlich der Vorbehandlungsvorrichtung (13, 13A) zu bedecken; und
eine Vorrichtung mit sich öffnendem und schließendem Deckel nach Anspruch 1.

## Revendications

1. Dispositif de couvercle d'ouverture et fermeture configuré pour être prévu pour recouvrir un cache de zone (23) et une première zone prévue sur une surface de travail (22) d'un logement (21) qui contient au moins une partie des parties fonctionnelles d'un analyseur (1), le dispositif de couvercle d'ouverture et fermeture comprenant :
un couvercle d'ouverture et fermeture (16, 16A) configuré pour recouvrir et ouvrir et fermer librement une partie d'ouverture prévue sur le cache de zone (23) afin d'accéder à un intérieur de la première zone depuis un extérieur ;
un bras de support (35) configuré pour relier, par le biais de la partie d'ouverture, une surface proche de la première zone du couvercle d'ouverture et fermeture (16, 16A) et un arbre de support (37, 37A) prévu à l'intérieur de la première zone et pour supporter en rotation le couvercle d'ouverture et fermeture (16, 16A) par rapport à l'arbre de support (37, 37A) ; **caractérisé par** :
un mécanisme de maintien d'ouverture comportant un mécanisme de verrouillage (30) prévu au niveau du bras de support (35) et un élément d'inclinaison (46) ; et
un cache inférieur (45) qui est séparé de et recouvre l'arbre de support (37, 37A) et le mécanisme de maintien d'ouverture depuis le dessous, dans lequel :
le bras de support (35) possède sensiblement une forme de V lorsqu'il est vu le long de l'axe de l'arbre de support (37, 37A) ;
le mécanisme de verrouillage (30) est formé par une partie d'angle (32) prévue au niveau d'une extrémité inférieure du bras de support (35) ;
une extrémité de l'élément d'inclinaison (46) est fixée sur une surface inférieure (47) du cache inférieur (45) et l'autre extrémité est incurvée vers le haut le long du cache inférieur (45) et présente une forme de poutre fléchie en porte-à-faux ;
l'élément d'inclinaison (46) est équipé d'une partie de griffe (48) qui est une partie en saillie qui fait face à l'arbre de support (37, 37A) ;
une surface supérieure de la partie de griffe (48) est formée comme une surface de verrouillage plane (49) sensiblement tournée dans la direction de l'arbre de support (37, 37A), et une surface oblique (50) est formée vers le bas en partant de la partie de griffe (48) ;
le mécanisme de maintien d'ouverture est configuré pour maintenir le bras de support (35) de façon à maintenir le couvercle d'ouverture et fermeture (16, 16A) dans une position entièrement ouverte lorsqu'une extrémité du couvercle d'ouverture et fermeture (16, 16A) au niveau d'un côté éloigné de l'arbre de support (37, 37A) est déplacée vers une position plus haute qu'une hauteur de référence prédéterminée, et pour libérer le bras de support (35) de sorte que le couvercle d'ouverture et fermeture (16, 16A) se déplace vers une position entièrement fermée en raison de son propre poids lorsque l'extrémité du couvercle d'ouverture et fermeture (16, 16A) est poussée sous la hauteur de référence ;
l'élément d'inclinaison (46) est configuré pour exercer sur le mécanisme de verrouillage (30) une force de maintien destinée à empêcher le couvercle d'ouverture et fermeture (16, 16A) de passer en position entièrement fermée en raison de son propre poids lorsque le couvercle d'ouverture et fermeture (16, 16A) se trouve dans la position entièrement ouverte ; et
le couvercle d'ouverture et fermeture (16, 16A) est configuré pour être maintenu par le mécanisme de maintien d'ouverture de sorte que l'extrémité au niveau du côté éloigné de l'arbre de support (37, 37A) soit plus haute que l'autre extrémité au niveau d'un côté proche de l'arbre de support (37, 37A) dans la position entièrement ouverte et que l'autre extrémité soit plus haute que l'extrémité dans la position entièrement fermée.

2. Dispositif de couvercle d'ouverture et fermeture selon la revendication 1, dans lequel
l'autre extrémité du couvercle d'ouverture et fermeture (16, 16A) est positionnée au-dessus de l'arbre de support (37, 37A) dans la position entièrement ouverte et la position entièrement fermée.

3. Dispositif de couvercle d'ouverture et fermeture selon la revendication 1, dans lequel
le mécanisme de maintien d'ouverture est configuré pour mettre fin à l'inclinaison du mécanisme de verrouillage (30) appliquée par l'élément d'inclinaison (46) de sorte que le couvercle d'ouverture et fermeture (16, 16A) passe en position entièrement fermée en raison de son propre poids lorsque l'extrémité du couvercle d'ouverture et fermeture (16, 16A) dans la position entièrement ouverte est poussée avec une force égale ou supérieure à une force prédéterminée.

4. Dispositif de couvercle d'ouverture et fermeture selon la revendication 1, comprenant en outre :
un élément étanche à l'air (29) qui est prévu à une limite entre le couvercle d'ouverture et fermeture (16, 16A) dans la position entièrement fermée et le cache de zone (23) et est configuré pour empêcher toute entrée et toute sortie d'air entre l'intérieur et l'extérieur de la première zone et pour empêcher la lumière de pénétrer à l'intérieur de la première zone.

5. Analyseur automatique (1) comprenant :
un mécanisme d'acheminement de contenant à échantillon (5) sur lequel un contenant à échantillon qui contient un échantillon à analyser doit être placé et acheminé ;
un mécanisme de maintien de contenant à réactif sur lequel un contenant à réactif (3) qui contient un réactif destiné à réagir avec l'échantillon doit être placé et maintenu ;
un mécanisme de réaction sur lequel un vase de réaction (14) doit être placé, l'échantillon (5a) et le réactif devant réagir dans le vase de réaction (14) ;
un mécanisme de distribution d'échantillon (6) qui est configuré pour distribuer l'échantillon qui se trouve dans le contenant à échantillon au vase de réaction (14) ;
un mécanisme de distribution de réactif (15) qui est configuré pour distribuer le réactif qui se trouve dans le contenant à réactif (3) au vase de réaction (14) ;
un dispositif de prétraitement (13, 13A) qui est configuré pour prétraiter une solution de réaction de l'échantillon et du réactif distribués dans le vase de réaction (14) ;
un dispositif de mesure qui est configuré pour mesurer la solution de réaction soumise à un prétraitement par le dispositif de prétraitement (13, 13A) ;
un cache de zone (23) qui est prévu pour recouvrir une première zone comportant le dispositif de prétraitement (13, 13A) ; et
le dispositif de couvercle d'ouverture et fermeture selon la revendication 1.
